# EUROPÄISCHE PATENTANMELDUNG

(11) **EP 2 466 723 A1**
(43) Veröffentlichungstag der Anmeldung: **20.06.2012**
(21) Anmeldenummer: 10195843.7
(22) Anmeldetag: 20.12.2010
(51) Int. Cl.: H02K 1/18, H02K 1/14, H02K 16/00

(54) **Transversalflussmaschine**

(71) Anmelder: CYORIS AG, 3600 Thun (CH)
(72) Erfinder: Bütschi, Thomas, 3647, Reutigen (CH); Kunz, Beat, 3706, Leissigen (CH); Erni, Michel, 3652, Hilterfingen (CH)
(74) Vertreter: AMMANN PATENTANWÄLTE AG BERN

(57) **Zusammenfassung**

Die Transversalflussmaschine hat mindestens eine aussenliegenden Rotor-Poleinheit und mindestens eine innenliegende, auf einer Statorachse angeordnete Stator-Poleinheit. Letztere enthält eine koaxial zur Maschinenlängsachse angeordnete Spule (13) und einen Statorkern, der aus einem in der Spule (13) angeordneten Flussrohr (5) und an beiden Enden des Flussrohrs (5) angeordneten zahnscheiben (4) mit am Umfang angeordneten, radial orientierten Zähnen (33) zusammengesetzt ist. Um eine hohe Genauigkeit der Winkelposition der Zähne (33) zu erreichen, sind Mittel (8, 9, 10) zur formschlüssigen Festlegung der gegenseitigen Winkelposition der Zahnscheiben (4) und/oder der Zahnscheiben (4) gegenüber der Statorachse (16) vorhanden.

## Beschreibung

Die Erfindung betrifft eine Transversalflussmaschine mit mindestens einer aussenliegenden Rotor-Poleinheit und mindestens einer innenliegenden, auf einer Statorachse angeordneten Stator-Poleinheit, enthaltend eine koaxial zur Maschinenlängsachse angeordneten Spule und einen Statorkern, der aus einem in der Spule angeordneten Flussrohr und an beiden Enden des Flussrohrs angeordneten Zahnscheiben mit am Umfang angeordneten, radial orientierten Zähnen zusammengesetzt ist.

Es sind Transversalflussmaschinen bekannt, beispielsweise aus den Dokumenten EP1005136A1 und W02007000054A1, bei denen der Stator in Umfangsrichtung hintereinander angeordnete U-förmige Joche aufweist. Die Herstellung solcher U-Joche ist zwar relativ einfach, jedoch ist deren Montage am Stator ziemlich aufwändig. Ein wesentlicher Nachteil dieser Konstruktion besteht indessen darin, dass die Statorwicklung zwischen die Schenkel der U-Joche durch Aufwinden eingebracht werden muss.

Es sind auch Transversalflussmaschinen bekannt, bei denen der Statorkern aus einem in der Spule angeordneten Flussrohr und an beiden Enden des Flussrohrs angeordneten Zahnscheiben mit am Umfang angeordneten, radial orientierten Zähnen zusammengesetzt ist. Ein solcher Statorkern ist relativ einfach herzustellen und zu montieren. Insbesondere kann mit einem solchen Statorkern eine vorgefertigte Spule als Statorwicklung verwendet werden.

Die Zähne einer Poleinheit werden so gegeneinander ausgerichtet, dass jeweils ein Zahn einer Zahnscheibe mit einer Lücke der anderen Zahnscheibe ausgerichtet ist. Ausserdem werden bei Maschinen mit mehr als einer Poleinheit die Zähne der einzelnen Poleinheiten entsprechend der Polzahl gegeneinander versetzt angeordnet. Es wurde gefunden, dass die Winkel-Positioniergenauigkeit der Zähne einen sehr hohen Einfluss auf die Leistung und das Rastmoment der Maschine hat.

Ausgehend von diesem Stand der Technik liegt der Erfindung die Aufgabe zugrunde, eine Transversalflussmaschine der eingangs genannten Art vorzuschlagen, die einfach herstellbar ist und bei der sich die Zahnscheiben winkelmässig sehr genau positionieren lassen.

Gelöst werden diese Aufgaben erfindungsgemäss dadurch, dass Mittel zur formschlüssigen Festlegung der gegenseitigen Winkelposition der Zahnscheiben und/oder der zahnscheiben gegenüber der Statorachse vorhanden sind.

Durch die Mittel zur formschlüssigen Festlegung hängt die Positioniergenauigkeit ausschliesslich von der Fertigungsgenauigkeit der einzelnen Teile ab und Ungenauigkeiten bei der Montage der Maschine sind praktisch ausgeschlossen.

Nach einer Ausführungsart sind die Mittel zur formschlüssigen Festlegung der gegenseitigen Winkelposition der Zahnscheiben als zwischen den Zahnscheiben und dem Flussrohr wirkende Formschlusselemente ausgebildet. Somit lässt sich eine hohe Positioniergenauigkeit der beiden Zahnscheiben einer Stator-Poleinheit unabhängig von deren Drehlage auf der Statorwelle erreichen.

Eine andere Ausführungsart sieht vor, dass das Flussrohr quer geteilt ist, dass jeweils eine zahnscheibe mit einem Teil des Flussrohrs fest verbunden ist und dass die Mittel zur formschlüssigen Festlegung der gegenseitigen Winkelposition der zahnscheiben als zwischen den beiden Teilen des Flussrohres wirkende Formschlusselemente ausgebildet sind. Auch mit dieser Massnahme lässt sich eine hohe Positioniergenauigkeit der beiden Zahnscheiben einer Stator-Poleinheit unabhängig von deren Drehlage auf der Statorachse erreichen.

Gemäss einer weiteren Ausführungsart bestehen die Mittel zur formschlüssigen Festlegung der Winkelposition der zahnscheiben gegenüber der Statorachse als ringförmige Körper mit mindestens einem axial abstehenden, zwischen die Zähne greifenden Haltefortsatz und mindestens einem radial nach innen ragenden, in eine Längsnut der Statorachse greifenden Führungsfortsatz. Damit werden die beiden Zahnscheiben einer Stator-Poleinheit über deren Winkel-Festlegung gegenüber der Statorachse exakt gegeneinander positioniert. Darüber hinaus können mit dieser Massnahme auch die Zahnscheiben zweier oder mehrerer Stator-Poleinheiten gegenseitig exakt ausgerichtet werden.

Nach einer anderen Ausführungsart weisen die zahnscheiben mindestens einen radial orientierten Schlitz auf. Dadurch werden ein Ringschluss und damit einhergehende Verluste verhindert.

Gemäss einer weiteren Ausführungsart weist das Flussrohr mindestens einen radial orientierten Schlitz auf. Dadurch werden ein Ringschluss und damit einhergehende Verluste verhindert.

Nach einer besonderen Ausführungsart ist der Schlitz im Flussrohr in einem Winkel zur Maschinenlängsachse angeordnet. Diese Anordnung ermöglicht es, dass der Schlitz im Flussrohr mit den Schlitzen in den benachbarten Zahnscheiben ausgerichtet ist. Generell erreicht man durch die erwähnten Schlitze in den zahnscheiben und dem Flussrohr entweder eine höhere Leistung der Transversalflussmaschine oder man kann die Maschine bei gleicher Leistung kleiner bauen.

Gemäss einer weiteren Ausführungsart sind die Zahnscheiben aus rechtwinklig zur Maschinenlängsachse orientierten Schichten zusammengesetzt. Die einzelnen Schichten lassen sich beispielsweise durch Stanzen einfach herstellen und zu Zahnscheiben zusammensetzen.

Nach einer anderen Ausführungsart ist das Flussrohr aus mindestens zwei Schalenteilen zusammengesetzt. Dies vereinfacht die Herstellung des Flussrohrs, beispielsweise durch Biegen oder Pressen.

Eine weitere Ausführungsart sieht vor, dass das Flussrohr aus koaxial angeordneten Schichten zusammengesetzt ist. So kann das Flussrohr beispielsweise aus einzelnen Hülsen zusammengesetzt werden, wobei schliesslich im Betrieb geringere Wirbelstromverluste auftreten als in einem einstückigen Flussrohr.

Nach einer anderen Ausführungsart ist das Flussrohr durch Aufwickeln eines Bandes gebildet. Mit dieser sehr einfachen Herstellungsart treten im Betrieb ebenfalls geringere Wirbelstromverluste auf als bei einem einstückigen Flussrohr aus demselben Material.

Gemäss einer anderen Ausführungsart ist eine Steuereinheit auf der Statorachse angeordnet. Dadurch bildet die Transversalflussmaschine eine einbaufertige Einheit.

Schliesslich ist nach einer weiteren Ausführungsart vorgesehen, dass die Steuereinheit mittels Steckverbindungen mit elektrischen Leitern verbunden ist. Auf diese Weise kann die Steuereinheit sehr einfach montiert und gegebenenfalls ersetzt werden.

Ausführungsbeispiele der Erfindung werden nachstehend unter Bezugnahme auf die angefügten Zeichnungen beispielsweise näher beschrieben. Es zeigt
- Figuren 1 bis 4: jeweils in einer vereinfachten Längsschnittansicht eine Ausführungsart eines Joches,
- Figuren 5 bis 9: jeweils in einer vereinfachten perspektivischen Ansicht eine Ausführungsart eines Flussrohrs
- Figur 10: eine perspektivische Explosionsansicht einer weiteren Ausführungsart des Jochaufbaus,
- Figur 11: eine perspektivische Explosionsansicht einer Stator-Poleinheit,
- Figur 12: eine perspektivische Explosionsansicht des Stators, wobei dieser teilweise zusammengesetzt ist,
- Figur 13: eine perspektivische Ansicht des vollständig zusammengesetzten Stators,
- Figur 14: einen Längsschnitt durch eine Ausführungsart des Stators,
- Figur 15: einen Querschnitt durch die Ausführungsart des Stators von Figur 14,
- Figur 16: eine perspektivische Explosionsansicht eines Teils des Rotors, der Statorachse und einer Steuereinheit,
- Figur 17: eine Querschnittsansicht eines Teils des Rotors und
- Figur 18: eine Seitenansicht von drei Rotor-Poleinheiten.

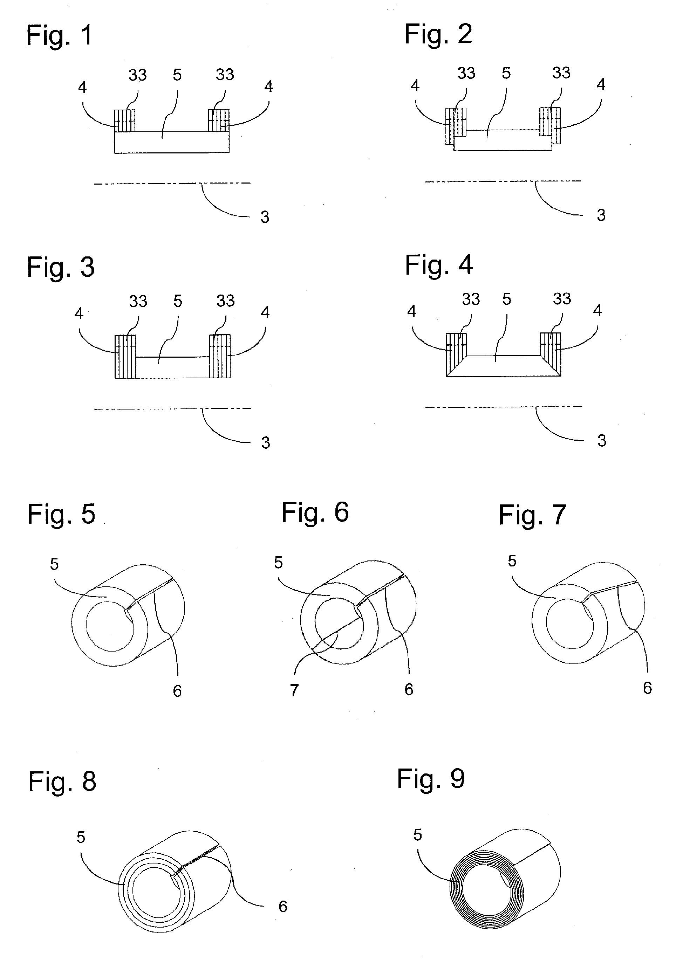

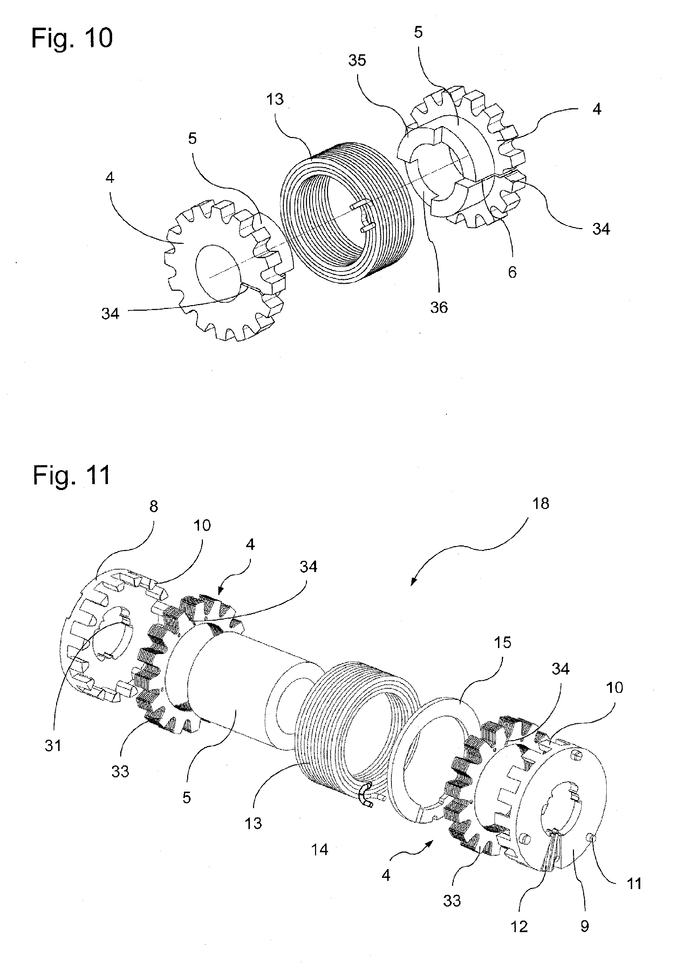

Die Figuren 1 bis 4 zeigen vier Varianten des Aufbaus der Joche des Stators eines Ausführungsbeispiels der erfindungsgemässen Transversalflussmaschine. Dabei ist jedes Joch, beginnend auf der linken Seite der jeweiligen Figur, aus einem Zahn 33 einer zahnscheibe 4, aus einem Flussrohr 5 und einem weiteren Zahn 33 einer weiteren zahnscheibe 4 zusammengesetzt. Die Figuren zeigen nur die Hälfte eines Längsschnitts, wobei mit 3 die Längsachse der Maschine angedeutet ist. Die Zahnscheiben 4 weisen einen geschichteten Aufbau auf, wobei die Schichten rechtwinklig zur Längsachse 3 orientiert sind. Die Zahnscheiben 4 sind am Besten in Figur 11 zu sehen. Bei der Variante nach Figur 1 haben die Zahnscheiben eine durchgehende zentrale Öffnung, deren Innendurchmesser dem Aussendurchmesser des Flussrohrs 5 entspricht und sind an beiden Enden bündig auf das Flussrohr 5 aufgesetzt. Bei der Variante nach Figur 2 hat das Flussrohr 5 an beiden Enden jeweils einen zylindrischen Ansatz und die Zahnscheiben 4 weisen eine entsprechend im Durchmesser abgestufte zentrale Öffnung auf. Bei der Variante nach Figur 3 haben die Zahnscheiben 4 eine durchgehende zentrale Öffnung, deren Durchmesser dem Innendurchmesser des Flussrohres 5 entspricht und die Zahnscheiben 4 sind beiderseits stirnseitig an das Flussrohr 5 angefügt. Bei der Variante nach Figur 4 haben die Zahnscheiben 4 jeweils eine zentrale, konische Öffnung und das Flussrohr 5 ist an beiden Enden konisch zulaufend ausgebildet, sodass die Zahnscheiben 4 darauf passen. Alle vier beschriebenen und dargestellten Varianten haben den gemeinsamen Vorteil, dass beim Montieren der Maschine eine fertig gewickelte Spule auf das Flussrohr 5 geschoben werden kann, spätestens bevor die zweite Zahnscheibe 4 aufgesetzt oder angesetzt wird. Die zahnscheiben 4 haben vorzugsweise einen radialen Schlitz, um einen Ringschluss zu vermeiden, wie dies später noch anhand der Figur 11 erläutert wird. Bei allen Varianten gemäss den Figuren 1 bis 4 können zwischen den Zahnscheiben 4 und dem Flussrohr 5 wirksame Formschlusselemente vorgesehen sein, etwa Zahn- oder Polygonprofile oder Keilverbindungen, um zu gewährleisten, dass die Zähne 33 von zu einer Poleinheit gehörenden Zahnscheiben 4 zwangsläufig exakt gegeneinander ausgerichtet sind.

Die Figuren 5 bis 9 zeigen vier Varianten des Aufbaus des Flussrohrs 5 eines Ausführungsbeispiels der erfindungsgemässen Transversalflussmaschine. Bei den Varianten nach den Figuren 5 bis 8 weist das Flussrohr 5 jeweils einen radialen Schlitz 6 auf, der im Wesentlichen in Richtung der Längsachse 3 der Maschine orientiert ist. Der Schlitz 6 verhindert einen Ringschluss, wodurch eine höhere Maschinenleistung erzielt oder bei gleicher Leistung ein günstigeres Material für das Flussrohr 5 eingesetzt werden kann. Figur 5 zeigt ein einstückiges Flussrohr 5, während das Flussrohr 5 nach Figur 6 aus zwei Halbschalen aufgebaut ist, die an einer parallel zur Längsachse orientierten Verbindungsstelle 7 zusammengesetzt sind. Nach dem gleichen Prinzip kann das Flusstohr 5 auch als mehr als zwei Schalenteilen zusammengesetzt sein. Dadurch wird die Herstellung des Flussrohrs 5 vereinfacht. Bei der Variante nach Figur 7 ist der Schlitz 6 in einem spitzen Winkel zur Mittelachse ausgerichtet. Dies erlaubt es, den Schlitz 6 mit den Schlitzen 34 (Figur 11) der benachbarten zahnscheiben auszurichten. Bei der Variante nach Figur 8 ist das Flussrohr 5 aus einer Anzahl von koaxial angeordneten dünnwandigen Hülsen zusammengesetzt und das Flussrohr 5 gemäss Figur 9 ist aus einem dünnen Blechstreifen aufgewickelt. Selbstverständlich kann auch bei dieser Variante nach dem Wickeln noch ein Schlitz angebracht werden. Je nach den an die Transversalflussmaschine gestellten Anforderungen können das Flussrohr 5 und die Zahnscheiben 4 aus unterschiedlichen Materialien bestehen. Bei verhältnismässig geringen Drehzahlen kann beispielsweise Stahl verwendet werden. Bei etwas höheren Anforderungen empfiehlt sich die Herstellung der genannten Teile aus beschichtetem Elektroblech. Hohe Drehzahlen und Leistung erreicht man mit einem Material, das unter der Bezeichnung SMC bekannt ist und eine hohe Flussdichte zulässt. Gleichzeitig vereinfacht sich damit die Herstellung der Teile, da auf einen geschichteten Aufbau verzichtet werden kann.

Figur 10 zeigt in einer perspektivischen Explosionsansicht eine weitere Möglichkeit, wie die zahnscheiben 4 mit dem Flussrohr 5 zusammengesetzt werden können. Dabei ist das Flussrohr 5 geteilt, sodass es in einer definierten Lage zusammengesteckt werden kann, in der die Zähne der beiden zahnscheiben wunschgemäss miteinander ausgerichtet sind. Im Beispiel wird dies, wie bei einer Klauenkopplung, durch Klauen 35 erreicht, die in Ausnehmungen 36 am gegenüberliegenden Teil eingreifen. In dieser Figur sind auch die Schlitze 34 in den zahnscheiben 4 und der Schlitz 6 im Flussrohr sichtbar. Ausserdem ist eine Spule 13 eingezeichnet, um zu verdeutlichen, dass auch bei dieser Ausführungsart eine vorgefertigte Spule 13 eingesetzt werden kann.

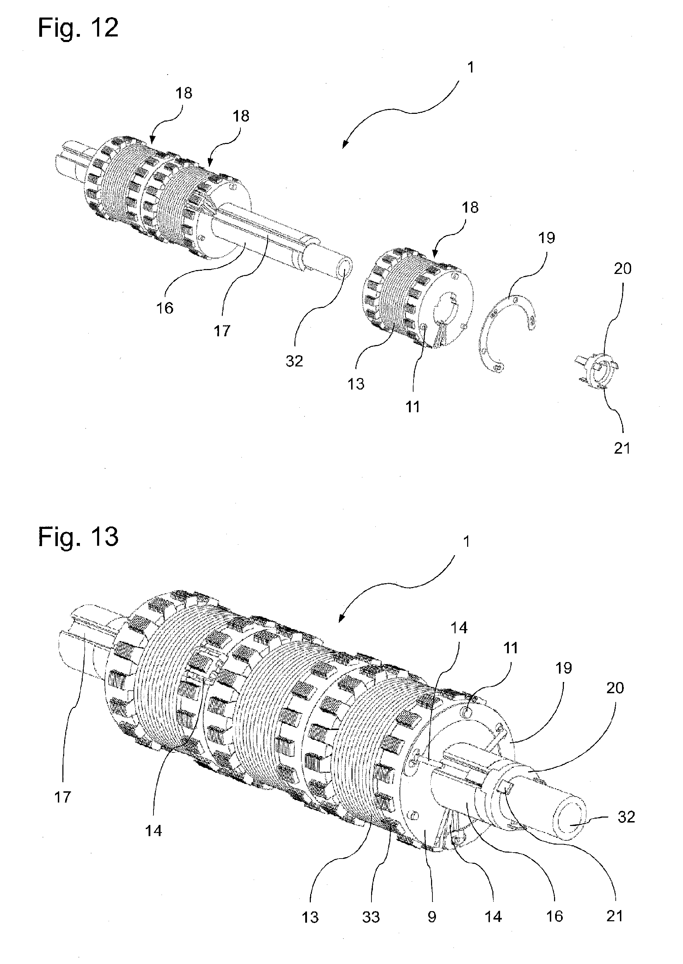

Figur 11 zeigt eine perspektivische Explosionsansicht einer Stator-Poleinheit 18. Diese kann praktisch in der Reihenfolge von links nach rechts in der Figur montiert werden. Ein Phasendeckel 8 hat axiale Haltefortsätze 10, mit denen er zwischen die Zähne 33 einer benachbarten Zahnscheibe 4 greift. In einer zentralen Bohrung hat der Phasendeckel 8 radial nach innen ragende Führungsfortsätze 31, mit denen er später in Nuten 17 (Figur 12) einer Statorachse 16 (Figur 12) eingreift und dadurch den Phasendeckel und damit die zahnscheibe 4 in einer definierten Winkellage auf der Statorachse hält. Ein Flussrohr 5 wird, beispielsweise entsprechend der weiter oben anhand der Figur 1 beschriebenen Variante, in die Zahnscheibe 4 gesteckt, sodass es mit seiner in der Figur 11 linken Stirnseite am Phasendeckel 8 anliegt. Anschliessend kann eine Spule 13 auf das Flussrohr 5 geschoben werden. Die Anschlussleiter der Spule 13 sind mit 14 bezeichnet. Ein Abstandhalter 15 hat einen radial verlaufenden Schlitz, der dazu dient, den Anschlussleiter 14 aus der innersten Lage der Spule 13 nach aussen zu führen. Mit der Montage einer weiteren Zahnscheibe 4 und anschliessend eines Phasenträgers 9 mit Haltefortsätzen 10 wird die Stator-Poleinheit 18 vervollständigt. Wie vorangehend im zusammenhang mit dem Flussrohr 5 beschrieben, haben auch die Zahnscheiben 4 vorteilhaft einen radialen Schlitz 34, um einen Ringschluss zu vermeiden. Der Phasenträger 9 hat radial verlaufende Nuten 12 für die Durchführung von Leitern und axial abstehende Positionierzapfen 11, deren Funktion nachstehend anhand der Figur 12 erläutert wird.

Figur 12 zeigt einen Stator 1 in einer perspektivischen Explosionsansicht, wobei zwei Stator-Poleinheiten 18 bereits auf der Statorachse 16 montiert sind, die dritte Stator-Poleinheit 18 jedoch noch nicht. Deutlich ist zu sehen, dass die Statorachse 16 an ihrem Umfang Längsnuten 17 hat und im Zentrum eine längs verlaufende Bohrung 32. Rechts in der Figur ist ein Kontaktring 19 zu sehen, der dazu bestimmt ist, drei Wicklungsenden der Spulen 13 miteinander zu verbinden, um einen Sternpunkt zu bilden. Der Kontaktring wird mithilfe der Positionierzapfen 11 am Phasenträger 9 fixiert. Schliesslich ist ganz rechts in Figur 12 eine Steckkontakteinheit 20 abgebildet, die drei Steckkontakte 21 umfasst, welche mit in den Längsnuten 17 der Statorachse geführten Leitern zu verbinden sind.

Figur 13 zeigt in einer perspektivischen Ansicht einen fertig zusammengestellten Stator 1. Dieser wird später noch mit einer Vergussmasse vergossen, sodass alle seine Komponenten in der dargestellten Lage fixiert und zudem gegen Feuchtigkeit und Schmutz geschützt sind. Als Vergussmasse kann beispielsweise Polyurethan (PUR) oder ein Epoxidharz (EP) sein. Bei den Zahnscheiben 4 sind nur die Spitzen der Zähne sichtbar, der Rest ist durch den Phasendeckel bzw. den Phasenträger 9 verdeckt. Gut sichtbar sind die Spulen 13 und der durch die Positionierzapfen 11 fixierte Kontaktring 19. Auch ist gut zu erkennen, wie die Anschlussleiter 14 einerseits zwischen den Zähnen 33 der zahnscheiben 4 hindurch und andererseits durch die Längsnut 17 in der Statorachse 16 geführt und mit den Steckkontakten 21 der Steckkontakteinheit 20 verbunden sind.

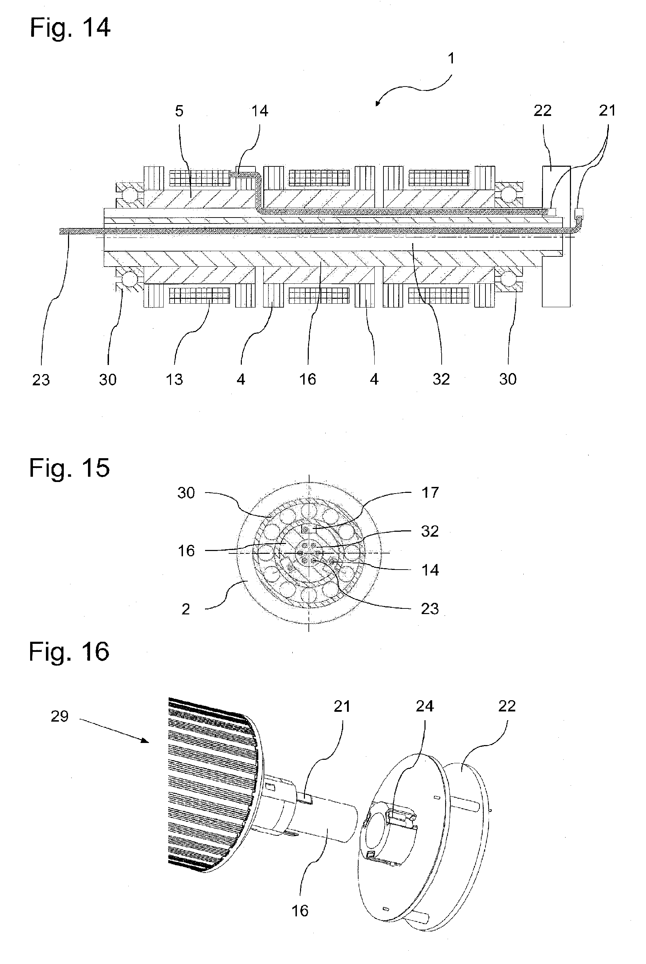

Figur 14 zeigt einen vereinfachten Längsschnitt durch den Stator 1, wobei hier besonders deutlich zu erkennen ist, wie Leiter 23 für die Speisung und Steuerung der Transversalflussmaschine durch die Bohrung 32 in der Statorachse 16 zu einer auf das in der Figur rechte Ende der Statorachse 16 aufgesteckten Steuereinheit 22 führen und dort mit Steckkontakten 21 verbunden sind. Von der Steuereinheit 22 führen Anschlussleiter 14 zu den drei Spulen 13. In beiden Endbereichen der Statorachse 16 ist jeweils ein im Beispiel als Kugellager ausgebildetes Lager 30 angeordnet. Auf den Aussenringen dieser Lager 30 stützt sich bei der fertig montierten Maschine der Rotor 2 (Figur 15) ab.

Figur 15 zeigt einen Querschnitt durch die Transversalflussmaschine, wobei von innen nach aussen die durch die zentrale Bohrung 32 der Statorachse 16 geführten Leiter 23 und die in den Längsnuten 17 der Statorachse 16 angeordneten Anschlussleiter 14 zu erkennen sind. Das Lager 30 trägt den aussenliegenden Rotor 2, der in dieser Figur nur schematisch dargestellt ist.

In Figur 16 ist in einer perspektivischen Explosionsansicht das Ende der Statorachse 16 dargestellt, das rechts aus einer Rotor-Poleinheit 29 herausragt. Die Figur veranschaulicht, wie die Steuereinheit 22 auf die Statorachse 16 aufgeschoben und mithilfe der Steckkontakte 21 und 24 angeschlossen werden kann.

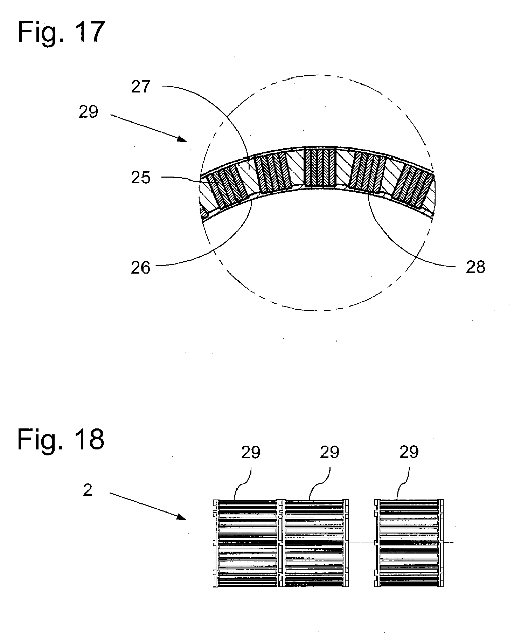

Figur 17 zeigt in einer Querschnittsansicht einen Ausschnitt aus einer Rotor-Poleinheit 29. Ein relativ dünnwandiger Rotorträger 26 nimmt an seinem Umfang Rotormagnete 25 auf, die als Dauermagnete und vorzugsweise als Schichtkörper aufgebaut sind. Die einzelnen Schichten können dabei beispielsweise durch Kleben oder Nieten miteinander verbunden sein. An den mit 28 bezeichneten Stellen weist der Rotorträger 26 aussen Vertiefungen auf, wodurch die Wandung an diesen Stellen sehr dünn ist, sodass der Luftspalt zwischen den Rotormagneten 25 und den Jochen möglichst dünn ist. Zwischen den Rotormagneten 25 und radial ausserhalb diesen ist eine Vergussmasse 27 zu sehen, die wie die im Zusammenhang mit dem Stator 1 erwähnte Vergussmasse beispielsweise aus PUR oder EP bestehen kann.

Figur 18 macht deutlich, wie mehrere, im Beispiel drei Rotor-Poleinheiten 29 hintereinander angeordnet und zu einem Rotor 2 verbunden werden können. Der Rotor 2 kann aussen ein Mantelrohr (nicht dargestellt), beispielsweise aus Aluminium aufweisen. Durch dieses Mantelrohr und insbesondere die Vergussmasse sind alle Komponenten des Rotors 2 gegen Korrosion geschützt.

Der modulare Aufbau mit den Stator-Poleinheiten 18 und den Rotor-Poleinheiten 29 erlaubt es, einen Motor nach Bedarf zusammenzustellen, indem praktisch nach Belieben Phasen aneinandergereiht werden.

Die beschriebene Transversalflussmaschine kann sowohl als Motor als auch als Generator betrieben werden.

### Bezugszeichenliste

- 1: Stator
- 2: Rotor
- 3: Längsachse
- 4: Zahnscheibe
- 5: Flussrohr
- 6: Schlitz
- 7: Verbindungsstelle
- 8: Phasendeckel
- 9: Phasenträger
- 10: Haltefortsatz
- 11: Positionierzapfen
- 12: Nuten
- 13: Spule
- 14: Anschlussleiter
- 15: Abstandhalter
- 16: Statorachse
- 17: Längsnut
- 18: Stator-Poleinheit
- 19: Kontaktring
- 20: Steckkontakteinheit
- 21: Steckkontakt
- 22: Steuereinheit
- 23: Leiter
- 24: Steckkupplung
- 25: Rotormagnet
- 26: Rotorträger
- 27: Vergussmasse
- 28: Stelle
- 29: Rotor-Poleinheit
- 30: Lager
- 31: Führungsfortsatz
- 32: Bohrung
- 33: Zähne
- 34: Schlitz
- 35: Klaue
- 36: Ausnehmung
- 37:
- 38:
- 39:
- 40:

## Patentansprüche

1. Transversalflussmaschine mit mindestens einer aussenliegenden Rotor-Poleinheit (29) und mindestens einer innenliegenden, auf einer Statorachse (16) angeordneten Stator-Poleinheit (18), enthaltend eine koaxial zur Maschinenlängsachse (3) angeordneten Spule (13) und einen Statorkern, der aus einem in der Spule (13) angeordneten Flussrohr (5) und an beiden Enden des Flussrohrs (5) angeordneten Zahnscheiben (4) mit am Umfang angeordneten, radial orientierten Zähnen (33) zusammengesetzt ist, **dadurch gekennzeichnet, dass** Mittel (8, 9, 10, 35, 36) zur formschlüssigen Festlegung der gegenseitigen Winkelposition der zahnscheiben (4) und/oder der Zahnscheiben (4) gegenüber der Statorachse (16) vorhanden sind.

2. Transversalflussmaschine nach Anspruch 1, **dadurch gekennzeichnet, dass** die Mittel zur formschlüssigen Festlegung der gegenseitigen Winkelposition der zahnscheiben (4) als zwischen den Zahnscheiben (4) und dem Flussrohr (5) wirkende Formschlusselemente ausgebildet sind.

3. Transversalflussmaschine nach Anspruch 1, **dadurch gekennzeichnet, dass** das Flussrohr quer geteilt ist, dass jeweils eine Zahnscheibe (4) mit einem Teil des Flussrohrs fest verbunden ist und dass die Mittel zur formschlüssigen Festlegung der gegenseitigen Winkelposition der Zahnscheiben (4) als zwischen den beiden Teilen des Flussrohres (5) wirkende Formschlusselemente (35, 36) ausgebildet sind.

4. Transversalflussmaschine nach einem der vorangehenden Ansprüche, **dadurch gekennzeichnet, dass** die Mittel zur formschlüssigen Festlegung der Winkelposition der zahnscheiben (4) gegenüber der Statorachse als ringförmige Körper (8, 9) mit mindestens einem axial abstehenden, zwischen die Zähne (33) greifenden Haltefortsatz (10) und mindestens einem radial nach innen ragenden, in eine Längsnut (17) der Statorachse (16) greifenden Führungsfortsatz (31) bestehen.

5. Transversalflussmaschine nach einem der vorangehenden Ansprüche, **dadurch gekennzeichnet, dass** die Zahnscheiben (4) mindestens einen radial orientierten Schlitz (34) aufweisen.

6. Transversalflussmaschine nach einem der vorangehenden Ansprüche, **dadurch gekennzeichnet, dass** das Flussrohr (5) mindestens einen radial orientierten Schlitz (6) aufweist.

7. Transversalflussmaschine nach Anspruch 6, **dadurch gekennzeichnet, dass** der Schlitz (6) im Flussrohr in einem Winkel zur Maschinenlängsachse (3) angeordnet ist.

8. Transversalflussmaschine nach einem der vorangehenden Ansprüche, **dadurch gekennzeichnet, dass** die Zahnscheiben (4) aus rechtwinklig zur Maschinenlängsachse (3) orientierten Schichten zusammengesetzt sind.

9. Transversalflussmaschine nach einem der vorangehenden Ansprüche, **dadurch gekennzeichnet, dass** das Flussrohr (5) aus mindestens zwei Schalenteilen zusammengesetzt ist.

10. Transversalflussmaschine nach einem der vorangehenden Ansprüche, **dadurch gekennzeichnet, dass** das Flussrohr (5) aus koaxial angeordneten Schichten zusammengesetzt ist.

11. Transversalflussmaschine nach einem der Ansprüche 1 bis 9, **dadurch gekennzeichnet, dass** das Flussrohr (5) durch Aufwickeln eines Bandes gebildet ist.

12. Transversalflussmaschine nach einem der vorangehenden Ansprüche, **dadurch gekennzeichnet, dass** eine Steuereinheit (22) auf der Statorachse (16) angeordnet ist.

13. Transversalflussmaschine nach Anspruch 12, **dadurch gekennzeichnet, dass** die Steuereinheit (22) mittels Steckverbindungen (21, 24) mit elektrischen Leitern (14, 23) verbunden ist.
